# EUROPEAN PATENT SPECIFICATION

(11) **EP 1 975 202 B1**
(45) Date of publication and mention of the grant of the patent: **14.12.2011**
(21) Application number: 08005576.7
(22) Date of filing: 26.03.2008
(51) Int. Cl.: C09B 29/00, C09B 29/12, C09B 29/10, C09B 29/36, C09B 29/33, C09B 29/32, C09B 27/00, C09B 29/036, C09B 29/039, B41M 5/035

(54) **Novel azo compound and azo dye**
Neuartige Azoverbindung und Azofarbstoff
Nouveau composé azoïque et colorant azoïque

(30) Priority: 27.03.2007 JP 2007080760; 21.05.2007 JP 2007134786
(43) Date of publication of application: 01.10.2008
(73) Proprietor: FUJIFILM Corporation, Minato-ku Tokyo (JP)
(72) Inventor: Tukase, Masaaki, Minami-ashigara-shi Kanagawa 250-0193 (JP)
(74) Representative: HOFFMANN EITLE

(56) References cited:
- EP-A- 1 366 752
- DE-A1- 2 348 382
- JP-A- 2006 169 239
- US-A1- 2006 111 568
- US-A1- 2006 142 553

## Description

The present invention relates to an azo compound and an azo dye.

### BACKGROUND OF THE INVENTION

Azo dyes are dyes prepared by an azo-coupling reaction between a so-called coupler component such as a compound having an active hydrogen, phenols, and p-dialkylaminobenzenes, and a diazonium salt prepared from an amino aryl compound or an aminohetero aromatic compound (so-called diazo component). Coupler components and azo components having various structures and one can freely select from them as the coupler component and the diazo component. Therefore, the azo dyes may have wide range of variety in terms of hue and may be representative in dyes.

Azo dyes have numerous excellent properties such as high dyeing property, fastness to heat, light, and washing, and low production cost, and thus have been hitherto used widely as coloring agents. At present, in addition to conventional coloring applications such as dyeing, the azo dyes are utilized for advanced image-related equipment such as display components and used in a wide range of fields (see K. Hunger, Ed., Industrial Dyes, Chemistry, Properties, Applications, published by Wiley-VCH, 2003).

Recently, application fields of the dyes have diversified as described above, because color images have become the mainstream of image-recording materials. In the case of these color image recording materials and color filters, three primary-color coloring agents (dyes or pigments) are used for reproducing or recording full-color images based on a so-called additive color mixture method or subtractive color mixture method. However, at present, there is no coloring agent having absorbing properties that realize a favorable color-reproducing range, and showing good color hue and fastness under various usage conditions and environmental conditions. Therefore, improved coloring agents have been demanded in the art.

Coloring agents used in these applications have been demanded to give desired absorption properties for color reproduction, fastness properties under environmental conditions in which the coloring agents can be used, and a higher molar absorption coefficient.

Synthesis of a novel heterocyclic compound having an azo group in a ring, that is, a 1,10-heterodisubstituted benzo[c]cinnoline derivative has been reported recently (see V. Benin et al., J. Org. Chem., vol.65, p.6388, 2000, for example). However, the report focuses on a mechanism of a ring formation reaction and discussion of structural chemistry.

A hair dye composition comprising a dissociative azo dye according to a particular general Formula (I) has been disclosed in EP-A-1 366 752. The dye compound imparts a vivid colour without decomposition of dye during the dying process. The dye is also reported to display good stability towards degradation caused by light, washing, perspiration, friction, heat, alkalising agents and oxidising agents.

### SUMMARY OF THE INVENTION

An azo compound represented by Formula (1): 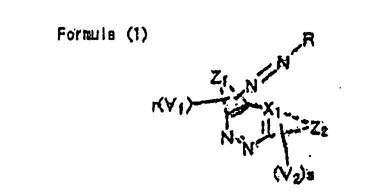 wherein Z₁ represents a group of atoms necessary for forming an aromatic ring or an aromatic hetero ring; Z₂ represents a group of atoms necessary for forming an aromatio hetero ring; V₁ and V₂ each represent a substituent on the aromatic ring or the aromatic hetero ring formed by Z₁ or Z₂, r represents 0 to 3; s represents 0 to 3; R represents a coupler component; R, V₁, and V₂ do not include any of a carboxyl group, a sulfo group and a quaternary ammonium group; and X₁ represents a carbon atom or a nitrogen atom; wherein R is represented by one of Formula (5), Formula (6), Formula (7), Formula (8), Formula (9), Formula (10), Formula (11), Formula (12), Formula (13), Formula (14) and Formula (15): 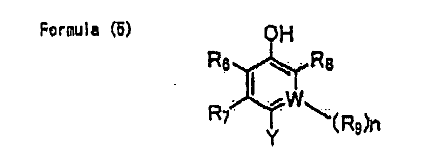 wherein Y represents a binding site to the azo group; R₆, R₇, P₈, and R₉ each represent a hydrogen atom or a substituent, and may be bonded with each other to form a condensed ring; W represents a carbon atom or a nitrogen atom; when W represents a carbon atom, n represents 1; and when W represents a nitrogen atom, n represents 0; 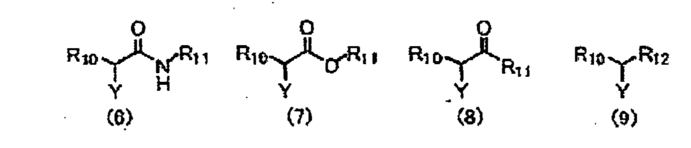 wherein R₁₀ represents an acyl group, a cyano group, a nitro group, an aryl group, a heterocyclic group, an alkoxycarbonyl group, an aryloxycarbonyl group, a carbamoyl group, a sulfamoyl group, an alkylsulfonyl group, or an arylsulfonyl group; R₁₁ represents an alkyl group, an aryl group, or a heterocyclic group; and R₁₂ represents an aryl group or a heterocyclic group; 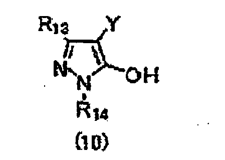 wherein R₁₃ represents a cyano group, a carbamoyl group, an alkoxycarbonyl group, an Acylamino group, an arylamino group, an alkoxy group, an aryloxy group, or an alkyl group; and R₁₄ represents a phenyl group, or a phenol group substituted by at least one halogen atom, alkyl group, cyano group, alkoxy group, alkoxycarbonyl group, or acylamino group; 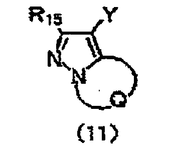 wherein R₁₅ represents a hydrogen atom or a substituent, and Q represents a group of non-metal atoms necessary for forming of a 5-membered azole ring containing 2 to 4 nitrogen atoms; 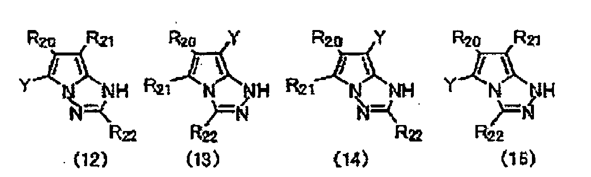 wherein R₂₀, R₂₁ and R₂₂ each represent a hydrogen atom or a substituent. Further, the present invention resides in an azo dye containing the azo 20 compound.

Other and further objects, features and advantages of the invention will appear more fully from the following description, appropriately referring to the accompanying drawings.

### 25 BRIEF DESCRIPTION OF THE DRAWINGS

Fig. 1 is an absorption spectrum (N,N-dimethylformamide as a solvent) of the exemplified compound D-12 according to the present invention.
Fig. 3 is an absorption spectrum (N,N-dimethylformamide as a solvent) of the exemplified compound D-25 according to the present invention.
Fig. 4 is an absorption spectrum (N,N-dimethylformamide as a solvent) of the exemplified compound D-36 according to the present invention.

### DETAILED DESCRIPTION OF THE INVENTION

According to the present invention, there is provided the following means:
(1) An azo compound represented by formula (1): 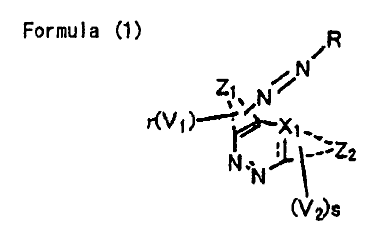 wherein Z₁ represents a group of atoms necessary for forming an aromatic ring or an aromatic hetero ring; Z₂ represents a group of atoms necessary for forming an aromatic hetero ring; V₁ and V₂ each represent a substituent on the aromatic ring or the aromatic hetero ring formed by Z₁ or Z₂; r represents 0 to 3; s represents 0 to 3; R represents a coupler component; R, V₁, and V₂ do not include any of a carboxyl group, a sulfo group and a quaternary ammonium group; R is bonded with the azo group through a carbon atom; and X₁ represents a carbon atom or a nitrogen atom.
(2) The azo compound as described in the above item (1), wherein the azo compound represented by formula (1) is a compound represented by formula (2): 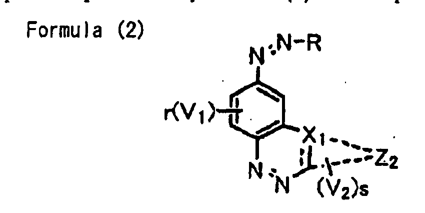 wherein Z₂ represents a group of atoms necessary for forming an aromatic hetero ring; V₁ represents a substituent on the aromatic ring; V₂ represents a substituent on the aromatic hetero ring formed by Z₂; r represents 0 to 3; s represents 0 to 3; R represents a coupler component; R, V₁, and V₂ do not include any of a carboxyl group, a sulfo group and a quaternary ammonium group; R is bonded with the azo group through a carbon atom; and X₁ represents a carbon atom or a nitrogen atom.
(3) The azo compound as described in the above item (1) or (2), wherein the azo compound represented by formula (1) or (2) is a compound represented by formula (3): 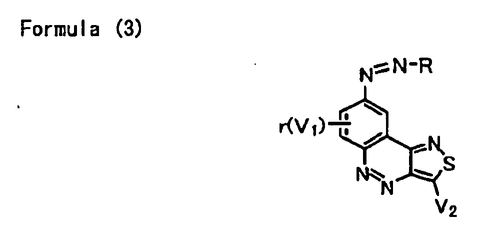 wherein V₁ and V₂ each represent a substituent; r represents 0 to 3; R represents a coupler component; R, V₁, and V₂ do not include any of a carboxyl group, a sulfo group and a quaternary ammonium group; and R is bonded with the azo group through a carbon atom.
(4) The azo compound as described in the above item (1) or (2), wherein the azo compound represented by formula (1) or (2) is a compound represented by formula (4): 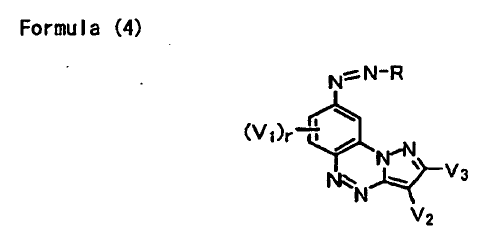 wherein V₁, V₂ and V₃ each represent a substituent; r represents 0 to 3; R represents a coupler component; R, V₁, V₂ and V₃ do not include any of a carboxyl group, a sulfo group and a quaternary ammonium group; and R is bonded with the azo group through a carbon atom; V₂ and V₃ may be bonded with each other to form a saturated or unsaturated 5- or 6-membered ring; when V₂ and V₃ are bonded with each other to form a ring, the ring may be a heterocyclic or aromatic, saturated or unsaturated ring; and when V₂ and V₃ are bonded with each other to form a ring, the total number of carbon atoms and hetero atoms in the ring is 3 to 6.
(5) The azo compound as described in any one of the above items (1) to (4),
   wherein the coupler component represented by R is represented by formula (5): 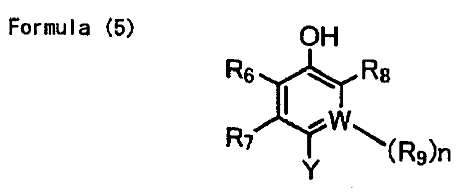 wherein Y represents a binding site to the azo group; R₆, R₇, R₈, and R₉ each independently represent a hydrogen atom or a substituent, and may be bonded with each other to form a condensed ring; W represents a carbon atom or a nitrogen atom; when W represents a carbon atom, n represents 1; and when W represents a nitrogen atom, n represents 0.
(6) An azo dye, comprising the azo compound as described in any one of the above items (1) to (5).

The present invention is explained in detail below.

The azo compound of the present invention is represented by formula (1).

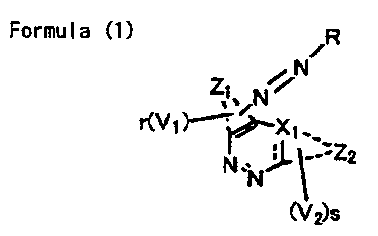

In formula (1), Z₁ represents a group of atoms necessary for forming an aromatic ring or an aromatic hetero ring; Z₂ represents a group of atoms necessary for forming an aromatic hetero ring; V₁ and V₂ each represent a substituent on the aromatic ring or the aromatic hetero ring formed by Z₁ or Z₂; r represents 0 to 3; s represents 0 to 3; R represents a coupler component; R, V₁, and V₂ do not include any of a carboxyl group, a sulfo group and a quaternary ammonium group; R is bonded with the azo group through a carbon atom; and X₁ represents a carbon atom or a nitrogen atom.

Here, any substituent represented by V₁, V₂, or V₃ descried later, means a group which can substitute for any hydrogen atom in the aromatic ring or the aromatic hetero ring. Examples of the substituent include an aliphatic hydrocarbon group (groups having 1 to 15 carbon atoms such as a methyl group, an ethyl group, a propyl group, an isopropyl group, a propargyl group, and a vinyl group are preferred), an aryl group (groups having 6 to 16 carbon atoms such as a phenyl group, a 4-nitrophenyl group, and a 2,4-dichlorophenyl group are preferred), a heterocyclic group (5- to 10-membered ring groups such as a 2-tetrahydrofuryl group, a 2-pyridyl group, a pyrimidine-2-yl group, a 1-imidazolyl group, a 1-pyrazolyl group, a 2-pyrrolyl group, a benzothiazol-2-yl group, and a benzoimidazol-2-yl group are preferred), an acyl group (groups having 1 to 15 carbon atoms such as an acetyl group, a 2-methylpropanoyl group, a pivaloyl group, and a benzoyl group are preferred), an acyloxy group (groups having 1 to 16 carbon atoms such as an acetoxy group, a propanoyloxy group, and a benzoyloxy group are preferred), an acylamino group (groups having 1 to 8 carbon atoms such as an acetylamino group, a propionylamino group, a 2-methylpropanoylamino group, a chloroacetylamino group, and a benzamide group are preferred), an aliphatic oxy group (groups having 1 to 16 carbon atoms such as a methoxy group, an ethoxy group, a butoxy group, and a 2-methoxyethoxy group are preferred), an aryloxy group (groups having 6 to 17 carbon atoms such as a phenoxy group, and a 4-nitrophenoxy group are preferred), a heterocyclic oxy group (5- to 10-membered ring groups such as a 2-pyrizyloxy group, a 2-furyloxy group, and a 3-pyrazoyloxy group are preferred), an aliphatic oxycarbonyl group (groups having 1 to 15 carbon atoms such as a methoxycarbonyl group, a 2-propyloxycarbonyl group, and a butoxycarbonyl group are preferred), an aryloxycarbonyl group (groups having 7 to 17 carbon atoms such as a phenoxycarbonyl group and a 4-methoxyphenoxy carbonyl group are preferred), a heterocyclic oxycarbonyl group (5- to 10-membered ring groups such as a 2-pyridyloxycarbonyl group and a 2-thienyloxycarbonyl group are preferred), a carbamoyl group (groups having 1 to 12 carbon atoms such as a carbamoyl group, an N-ethylcarbamoyl group, and an N,N-dimethylcarbamoyl group are preferred), an aliphatic sulfonyl group (groups having 1 to 15 carbon atoms such as a methanesulfonyl group, a butanesulfonyl group, a methoxyethanesulfonyl group are preferred), an arylsulfonyl group (groups having 6 to 16 carbon atoms such as a phenylsulfonyl group, a 4-t-butylphenylsulfonyl group, and a p-toluenesulfonyl group are preferred), a heterocyclic sulfonyl group (5- to 10-membered ring groups such as a 2-tetrahydropyranylsulfonyl group are preferred), an aliphatic sulfonyloxy group (groups having 1 to 15 carbon atoms such as a methanesulfonyloxy group and an ethanesulfonyloxy group are preferred), an arylsulfonyloxy group (groups having 6 to 16 carbon atoms such as a phenylsufonyloxy group are preferred), a heterocyclic sulfonyloxy group (5- to 10-membered ring groups such as a 2-pyridylsulfonyloxy group are preferred), a sulfamoyl group (groups having 0 to 12 carbon atoms such as a sulfamoyl group and an N,N-dimethylsulfamoyl group are preferred), an aliphatic sulfoneamide group (groups having 1 to 15 carbon atoms such as a methanesulfone amide group and a butanesulfoneamide group are preferred), an arylsufoneamide group (groups having 6 to 16 carbon atoms such as a benzenesulfoneamide group and a p-toluenesulfoneamide group are preferred), a heterocyclic sulfoneamide group (5- to 10-membered ring groups such as a 2-pyridylsulfonylamide group are preferred), an amino group, an aliphatic amino group (groups having 1 to 16 carbon atoms such as a methylamino group, an N,N-diethylamino group, and a butylamino group are preferred), an arylamino group (groups having 6 to 16 carbon atoms such as a phenylamino group are preferred), a heterocyclic amino group (5- to 10-membered ring groups such as a 2-pyridyl amino group, a pyrrazol-4-yl amino group, a benzoimidazol-2-yl amino group, a benzothiazol-2-yl amino group, a benzooxazol-2-yl amino group, a 2-oxazolyl amino group, a 1,2,4-triazol-3-yl amino group, a 1,2,4-thiadiazol-2-yl amino group, a 1,3,4-thiadiazol-2-yl amino group, a 1,2,4-oxadiazol-2-yl amino group, and a 1,3,4-oxadiazol-2-yl amino group are preferred), an aliphatic oxycarbonylamino group (groups having 2 to 12 carbon atoms such as a methoxycarbonylamino group, an ethoxycarbonylamino group, and a t-butoxycarbonylamino group are preferred), an aryloxycarbonylamino group (groups having 7 to 17 carbon atoms such as a phenoxycarbonylamino group are preferred), a heterocyclic oxycarbonylamino group (5- to 10-membered ring groups such as a 2-pyridyloxycarbonylamino group are preferred), an aliphatic sulfinyl group (groups having 1 to 12 carbon atoms such as a methylsulfinyl group and a butylsulfinyl group are preferred), an arylsulfinyl group (groups having 6 to 16 carbon atoms such as a phenylsulfinyl group are preferred), an aliphatic thio group (groups having 1 to 18 carbon atoms such as a methylthio group, an ethylthio group, a 2-ethoxyethylthio group, and a butylthio group are preferred), an arylthio group (groups having 6 to 18 carbon atoms such as a phenylthio group are preferred), an aliphatic oxyamino group (groups having 1 to 12 carbon atoms such as a methoxyamino group and a butoxyamino group are preferred), an aryloxyamino group (groups having 6 to 16 carbon atoms such as a phenoxyamino group are preferred), a carbamoylamino group (groups having 0 to 18 carbon atoms such as a carbamoyl amino group are preferred), a sulfamoyl amino group (groups having 0 to 18 carbon atoms such as a sulfamoylamino group and an N,N-dimethylsulfamoyl group are preferred), a sulfamoyl carbamoyl group (groups having 1 to 12 carbon atoms such as an N-(sulfamoyl)carbamoyl group and an N-(N',N'-dimethylsulfamoyl)carbamoyl group are preferred), a carbamoyl sulfamoyl group (groups having 1 to 12 carbon atoms such as an N-(carbamoyl)sulfamoyl group are preferred), a dialiphatic oxyphosphinyl (groups having 2 to 16 carbon atoms such as a dimethoxyphosphinyl group are preferred), a diaryloxyphosphinyl group (groups having 6 to 16 carbon atoms such as a phenoxyphosphinyl group are preferred), a hydroxyl group, a mercapto group, a cyano group, and a halogen atom.

Of those, as the substituent represented by V₁, V₂, and V₃, an aliphatic group, an aryl group, a halogen atom, a cyano group, a carbamoyl group, a sulfamoyl group, an alkylsulfonyl group, an arylsulfonyl group, or an acylamino group is preferred. Specific preferred examples of the aliphatic group include a methyl group, an ethyl group, and a tert-butyl group, and more preferred examples include a methyl group and an ethyl group. Specific preferred examples of the aryl group include a phenyl group and a naphthyl group, and a phenyl group is more preferable. As the halogen atom, a chlorine atom or a fluorine atom is preferred. As the carbamoyl group or the sulfamoyl group, an unsubstituted carbamoyl group or sulfamoyl group is particularly preferred. As the alkylsulfonyl group, a methylsulfonyl group or an ethylsulfonyl group is preferred. As the arylsulfonyl group, a phenylsulfonyl group or a tosylsulfonyl is preferred. As the acylamino group, an acetylamino group or a propionylamino group is preferred.

Among the substituents represented by V₁, V₂ and V₃, with respect to one having a hydrogen atom, the hydrogen atom may be removed and be substituted by any of the above-mentioned substituents. Examples of such a substituent include: a -CONHSO₂- group (e.g. a sulfonylcarbamoyl group or a carbonylsulfamoyl group); a -CONHCO- group (e.g. a carbonylcarbamoyl group); and an -SO₂NHSO₂- group (e.g. a sulfonylsulfamoyl group). Specific examples thereof include: an alkylcarbonylaminosulfonyl group (e.g. an acetylaminosulfonyl group); an arylcarbonylaminosulfonyl group (e.g. a benzoylaminosulfonyl group); an alkylsulfonylaminocarbonyl group (e.g. a methylsulfonylaminocarbonyl group); and an arylsulfonylaminocarbonyl group (e.g. a p-methylphenylsulfonylaminocarbonyl group).

Examples of the aromatic ring formed by Z₁ (hereinafter, may be referred to as "aromatic carbon ring") include a benzene ring, a naphthalene ring, an anthracene ring, a phenanthrene ring, or a benzene ring obtained through ring condensation of an aromatic hetero ring described below.

The aromatic carbon ring formed by Z₁ is preferably a benzene ring, a benzothiazole ring, or a benzimidazole ring, particularly preferably a benzene ring.

Examples of the aromatic hetero ring formed by Z₁ or Z₂ (hereinafter, also referred to as "aromatic hetero ring") include a 5-, 6-, 7-, or 8-membered aromatic hetero ring.

A preferred example of the aromatic hetero ring formed by Z₁ or Z₂ is a 5- or 6-membered nitrogen-containing hetero ring. The 5- or 6-membered nitrogen-containing hetero ring may be any 5- or 6-membered nitrogen-containing hetero ring, and may have a polycyclic heterocyclic structure obtained through ring condensation of a benzene ring or another hetero ring.

The aromatic hetero ring formed by Z₁ or Z₂ contains a hetero atom. The hetero atom is preferably a nitrogen atom, a sulfur atom, an oxygen atom, a selenium atom, a tellurium atom, a phosphorus atom, a silicon atom, or a boron atom; more preferably a nitrogen atom, a sulfur atom, an oxygen atom, or a selenium atom; particularly preferably a nitrogen atom, a sulfur atom, or an oxygen atom; and most preferably a nitrogen atom or a sulfur atom.

Specific preferred examples of the aromatic hetero ring include a furan ring, a pyrrole ring, a thiophene ring, an imidazole ring, a pyrazole ring, a thiazole ring, an isothiazole ring, an oxazole ring, an isoxazole ring, a triazole ring, a tetrazole ring, a thiadiazole ring, an oxadiazole ring, a pyran ring, a dioxane ring, a pyridine ring, a pyrazine ring, a pyrimidine ring, a pyridazine ring, a thiadiazine ring, an oxadiazine ring, an oxatriazole ring, a thiatriazole ring, an indolizine ring, a ring obtained by subjecting any of the above-mentioned rings to benzo ring condensation, e.g. a benzothiazole ring, a benzoxazole ring, a benzotriazole ring, a benzothiadiazole ring, a benzoxadiazole ring, a pyranone ring, a pyrillium ring, a triazine ring, a tetrazine ring, an indole ring, a quinolizine ring, a quinoline ring, a phthalazine ring, a quinoxaline ring, an isoquinoline ring, a carbazole ring, a phenanthridine ring, a phenanthroline ring, an acridine ring, a purine ring, and a pteridine ring. Of those, a pyridine ring, a pyrazole ring, an isothiazole ring, an imidazole ring, and a thiazole ring are preferable.

Those heterocycles may be substituted with any substituent or may be a condensed ring, where examples of the substituent include those of V₁ and V₂ as described above. In addition, even when there is another tautomeric structure of a heterocycle, they are chemically equivalent to each other.

In formula (1), "r" represents the number of substituents represented by V₁, preferably 0 to 3, more preferably 1 to 3, particularly preferably 1 or 2. In formula (1), "s" represents the number of substituents represented by V₂, preferably 0 to 3, more preferably 1 to 3, particularly preferably 1 or 2.

The azo compound represented by formula (1) preferably contains at least one of V₁ and V₂ as a substituent, more preferably both V₁ and V₂ as substituents.

Next, compounds represented by formulae (2), (3) or (4) will be described.

The azo compound represented by formula (1) is preferably represented by formula (2) as described below.

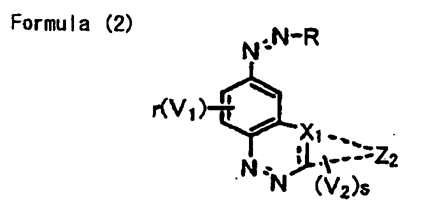

In formula (2), Z₂ represents a group of atoms necessary for forming an aromatic hetero ring; V₁ represents a substituent on the aromatic ring; V₂ represents a substituent on the aromatic hetero ring formed by Z₂; r represents 0 to 3; s represents 0 to 3; R represents a coupler component; R, V₁, and V₂ do not include any of a carboxyl group, a sulfo group and a quaternary ammonium group; R is bonded with the azo group through a carbon atom; and X₁ represents a carbon atom or a nitrogen atom.

The azo compound represented by formula (1) or (2) is preferably represented by formula (3) as described below.

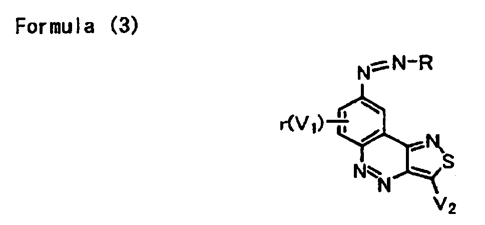

In formula (3), V₁ and V₂ each represent a substituent; r represents 0 to 3; R represents a coupler component; R, V₁, and V₂ do not include any of a carboxyl group, a sulfo group and a quaternary ammonium group; and R is bonded with the azo group through a carbon atom.

The azo compound represented by formula (1) or (2) is also preferably represented by formula (4) as described below.

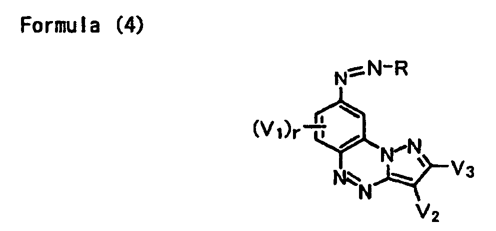

In formula (4), V₁, V₂ and V₃ each represent a substituent; r represents 0 to 3; R represents a coupler component; R, V₁, V₂ and V₃ do not include any of a carboxyl group, a sulfo group and a quaternary ammonium group; and R is bonded with the azo group through a carbon atom; V₂ and V₃ may be bonded with each other to form a saturated or unsaturated 5- or 6-membered ring; when V₂ and V₃ are bonded with each other to form a ring, the ring may be a heterocyclic or aromatic, saturated or unsaturated ring; and, when V₂ and V₃ are bonded with each other to form a ring, the total number of carbon atoms and hetero atoms in the ring is 3 to 6.

In the azo compound represented by formula (2), (3), or (4), the respective preferable ranges of Z₂, V₁, V₂, and V₃ are synonymous with those of the azo compound represented by formula (1) described above.

In formula (4), as described above, V₂ and V₃ may bonded with each other to form a ring (an aromatic or nonaromatic hydrocarbon ring, a heterocycle, or a polycyclic condensed ring formed by condensing thereof, such as a benzene ring, a naphthalene ring, an anthracene ring, a phenanthrene ring, a fluorene ring, a triphenylene ring, a naphthacene ring, a biphenyl ring, a pyrrole ring, a furan ring, a thiophene ring, an imidazole ring, an oxazole ring, a thiazole ring, a pyridine ring, a pyrazine ring, a pyrimidine ring, a pyridazine ring, an indolizine ring, an indole ring, a benzofuran ring, a benzothiophene ring, an isobenzofuran ring, a quinolizine ring, a quinoline ring, a phthalazine ring, a naphthyridine ring, a quinoxaline ring, a quinoxazoline ring, an isoquinoline ring, a carbazole ring, a phenanthridine ring, an acridine ring, a phenanthroline ring, a thianthrene ring, a chromene ring, a xanthene ring, a phenoxathiine ring, a phenothiazine ring, or a phenazine ring). Of those, a benzene ring and a pyridine ring are preferable.

The azo compound represented by formula (1), (2), (3) or (4) may be synthesized, for example, through a method involving intramolecular azo coupling of a bi(hetero)aryl compound having an amino group (e.g. a method of forming the bond, according to the description by V. Benin et al., in J. Org. Chem., vol.65, p.6388, 2000) or a method of forming the bond through a reaction between an amino group on a bi(hetero)aryl compound and a nitrogen-containing compound (e.g. a method of forming the bond through a reaction between the amino group and a nitrite in the presence of an acid). A method of synthesizing the bi(hetero)aryl compound having an amino group may be determined, according to a target compound structure including the substituents V₁ and V₂.

The substituents V₁, V₂ and V₃ may be introduced at any time in a reaction process, and are preferably introduced before the intramolecular azo coupling is performed. For introducing the substituents V₁, V₂ and V₃ at the beginning or during the reaction process, the substituents are arbitrarily protected or deprotected, to thereby obtain a compound having the target structure.

In the synthesis of the azo compound of the present invention, the procedures of synthesizing the diazo component may be carried out with reference to JP-A-2006-143902 ("JP-A" means unexamined published Japanese patent application); JP-A-2006-169239; Liebigs Annal en der Chemie, GE, 1979, pp. 1534-1546; and the like.

The coupler component represented by R means a partial structure originated from a coupler compound capable of giving an azo dye by reaction with a diazonium salt. This concept is usually used in the field of azo dye.

In the present invention, the coupler component represented by R is preferably a coupler component represented by any of formulae (5) to (17) as described below. In general, these coupler components include those collectively referred to as phenol-based couplers, naphthol-based couplers, active methylene-based couplers, pyrazolone-based couplers, pyrazolo azole-based couplers, and pyrrolo triazole-based couplers. In formulae (5) to (17), Y represents a binding site to the azo group in the compound represented by formulae (1) to (4).

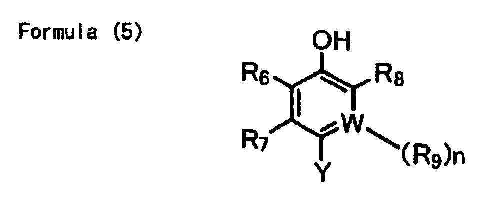

In formula (5), R₆, R₇, R₈, and R₉ each independently represent a hydrogen atom or a substituent, and may be bonded with each other to form a condensed ring; W represents a carbon atom or a nitrogen atom; when W represents a carbon atom, n is 1; and when W represents a nitrogen atom, n is 0.

The substituents represented by R₆, R₇, R₈, and R₉ each independently include those exemplified as the substituents represented by V₁, V₂, and V₃ as described above. When a ring is formed by bonding R₆ and R₇, or R₈ and R₉, the ring may be an aromatic ring or a nonaromatic ring. In addition, the ring may be a 5- to 7-membered, carbon ring or heterocycle (e.g., a benzene ring or a pyridine ring).

Specific examples of the substituent represented by R₆, R₇, R₈, and R₉ include a hydrogen atom, an aliphatic hydrocarbon group, an aryl group, a heterocyclic group, an acyloxy group, an acylamino group, an aliphatic oxy group, an aryloxy group, a heterocyclic oxy group, an aliphatic sulfoneamide group, an arylsulfoneamide group, a heterocyclic sulfoneamide group, an amino group, an aliphatic amino group, an arylamino group, a heterocyclic amino group, an aliphatic oxycarbonylamino group, an aryloxycarbonylamino group, a heterocyclic oxycarbonylamino group, an aliphatic thio group, an arylthio group, a hydroxyl group, a cyano group, a sulfo group, a carboxyl group, a carbamoylamino group, a sulfamoylamino group, and a halogen atom. More preferred are a hydrogen atom, an aliphatic hydrocarbon group, a heterocyclic group, an acylamino group, an aliphatic oxy group, an aryloxy group, an aliphatic sulfoneamide group, an arylsulfoneamide group, an aliphatic amino group, an arylamino group, a heterocyclic amino group, an aliphatic thio group, an arylthio group, and a halogen atom.

Of those, the substituents represented by R₆ and R₈ are preferably a group selected from a hydrogen atom, a halogen atom, a cyano group, -CONR₁₈R₁₉, -SO₂NR₁₈R₁₉, -NHCOR₁₈, -NHCONR₁₈R₁₉, and -NHSO₂NR₁₈R₁₉. Here, R₁₈ and R₁₉ each represent a hydrogen atom or a substituent, preferably a hydrogen atom, an alkyl group having 1 to 10 carbon atoms, an aryl group having 6 to 10 carbon atoms, or a heterocyclic group having 1 to 10 carbon atoms.

In addition, the substituents represented by R₇ and R₉ each are preferably a hydrogen atom, an acylamino group, or a halogen atom.

The coupler component R is also preferably an active methylene-based coupler component represented by any one of formulae (6) to (9).

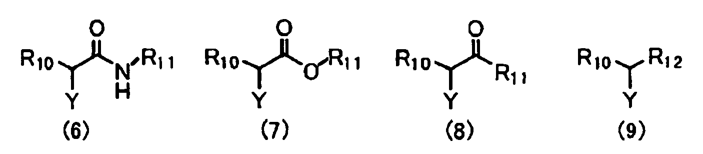

In formulae (6) to (9), R₁₀ represents an acyl group, a cyano group, a nitro group, an aryl group, a heterocyclic group, an alkoxycarbonyl group, an aryloxycarbonyl group, a carbamoyl group, a sulfamoyl group, an alkylsulfonyl group, or an arylsulfonyl group, each of which may be substituted. R₁₁ represents an alkyl group, an aryl group, or a heterocyclic group, each of which may be substituted. R₁₂ represents an aryl group or a heterocyclic group, each of which may be substituted.

Examples of the substituent which R₁₀, R₁₁, and R₁₂ may have include those exemplified for the above substituent V₁, V₂, or V₃. In formulae (6) to (9), R₁₀ and R₁₁ may be bonded with each other to form a ring, and R₁₀ and R₁₂ may be bonded with each other to form a ring.

The coupler component R is also preferably a 5-pyrazolone-based coupler component represented by formula (10).

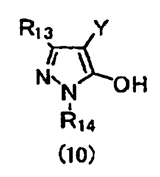

In formula (10), R₁₃ represents a cyano group, a carbamoyl group, an alkoxycarbonyl group, an acylamino group, an arylamino group, an alkoxy group, an aryloxy group, or an alkyl group. R₁₄ represents a phenyl group, or a phenyl group substituted by at least one halogen atom, alkyl group, cyano group, alkoxy group, alkoxycarbonyl group, or acylamino group.

The coupler component R is also preferably a pyrazolo azole-based coupler component represented by formula (11).

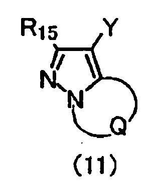

In formula (11), R₁₅ represents a hydrogen atom or a substituent, and Q represents a group of nonmetal atoms necessary for forming of a 5-membered azole ring containing 2 to 4 nitrogen atoms. The azole ring may have any of substituents including a condensed ring.

The coupler component R is also preferably a pyrrolo triazole-based coupler component represented by any one of formulae (12) to (15).

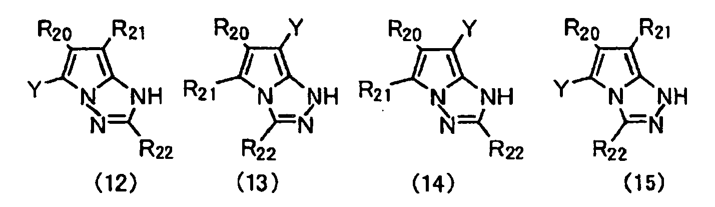

In formulae (12) to (15), R₂₀, R₂₁, and R₂₂ each represent a hydrogen atom or a substituent. The substituents of R₂₀, R₂₁, and R₂₂ may include the substituents exemplified for the above substituents V₁, V₂, and V₃.

Further, examples of the coupler component R further include a condensed phenol-based coupler, an imidazole-based coupler, a pyrrole-based coupler, a 3-hydroxypyridine-based coupler (e.g., couplers described in JP-A-1-315736), an active methylene-based coupler other than those described above, an active methine-based coupler, a 5,5-condensed heterocyclic coupler, and a 5,6-condensed heterocyclic coupler.

The coupler component R is also preferably represented by formula (16) or (17).

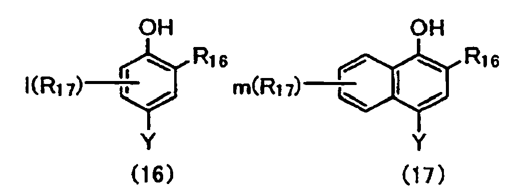

The compound represented by formula (16) is a coupler referred to as phenol-based coupler. The compound represented by formula (17) is a coupler referred to as naphthol-based coupler. In these formulae, R₁₆ represents a group selected from a hydrogen atom, a halogen atom, -CONR₁₈R₁₉, -SO₂NR₁₈R₁₉, -NHCOR₁₈, -NHCONR₁₈R₁₉, and -NHSO₂NR₁₈R₁₉. Here, R₁₈ and R₁₉ each represent a hydrogen atom or a substituent. R₁₇ represents a substituent, 1 represents an integer from 0 to 2, and m represents an integer from 0 to 4. A plurality of R₁₇ may be the same or different from one another when 1 and m each represent 2 or more.

R₁₇, R₁₈, or R₁₉ may be any of substituents including those exemplified for the above substituent V₁, V₂, or V₃. Particularly, R₁₈ and R₁₉ each are preferably a hydrogen atom, an alkyl group having 1 to 10 carbon atoms, an aryl group having 6 to 10 carbon atoms, or a heterocyclic group having 1 to 10 carbon atoms. Further, in formula (16), R₁₇ is preferably located at the ortho-position of the hydroxyl group or the para-position of R₁₆. In formula (17), R₁₇ is preferably located at the fifth position or the eighth position of the naphthol ring.

Of those coupler components, preferred as coupler components R are phenol, 2-chlorophenol, 2,5-dichloro or difluoro phenol, 2-carbamoylphenol, 2-sulfamoylphenol, 1-naphthol, 2-naphthol, 2-propionylaminophenol, 2-propionylamino-1-naphthol, 5-methylsulfonylamino-1-naphthol, 5-phenylsulfonylamino-2-propionylamino-1-naphthol, and particularly preferred are phenol, 2-chlorophenol, 2,5-difluorophenol, and 2-carbamoylphenol.

Specific examples of the azo dye represented by formula (1) according to the present invention are shown below. However, the present invention should not be construed as being limited to these compounds. Herein, the following specific examples of the azo dye represented by formula (1) may include tautomers thereof.

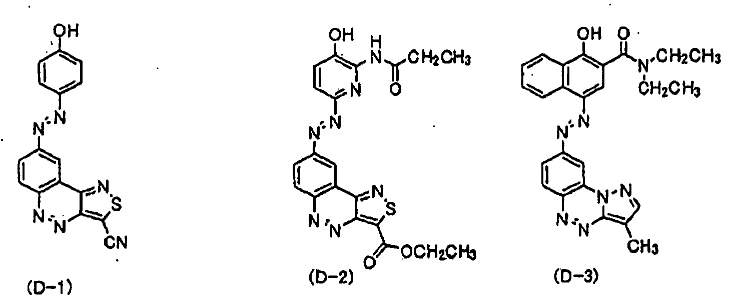

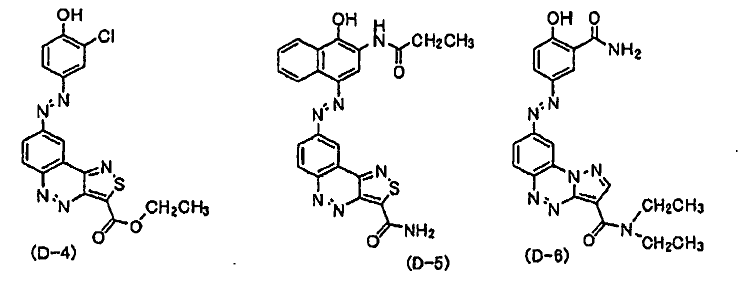

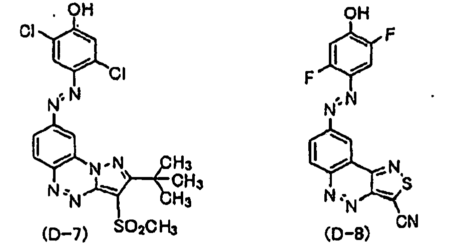

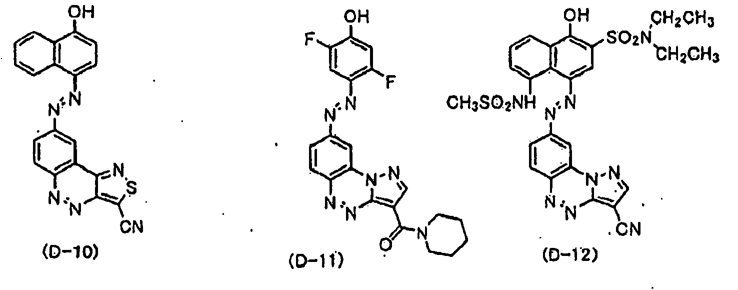

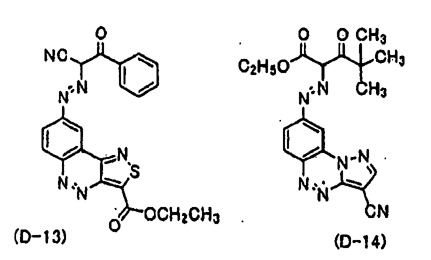

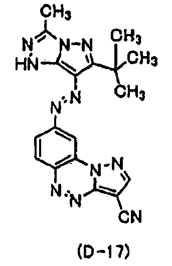

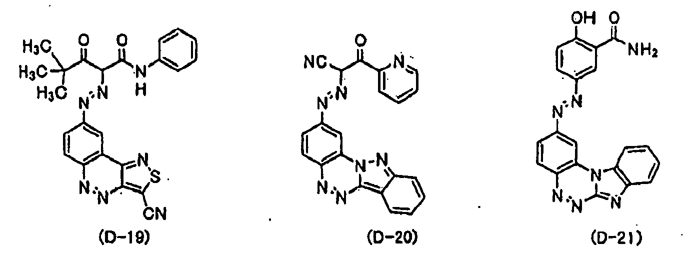

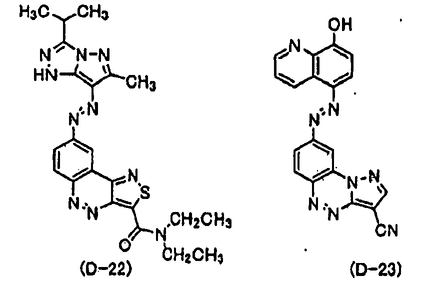

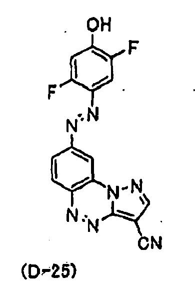

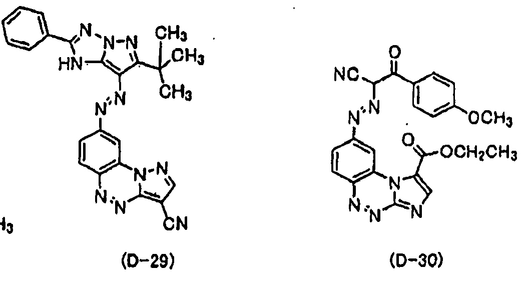

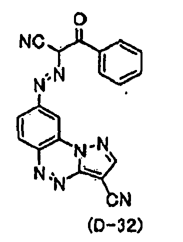

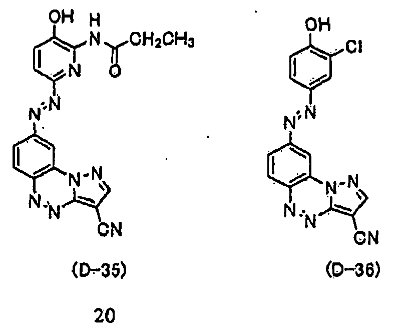

In the case where the compound of the present invention has a plurality of asymmetric carbon atoms in the molecule, a plurality of stereoisomers exist for the same structure. In this connection, in the specification, the compound of the present invention is shown to include all the possible stereoisomers. In the present invention, only one of the above plurality of stereoisomers may be used, or alternatively two or more stereoisomers may be used as a mixture.

The azo compound of the present invention can be preferably used as a dye. For example, the compound can be used for dyeing textile fibers (e.g. cotton, wool, or synthetic fiber), leather, paper, plastic, fur, etc., for food, for a hair dye, for an ink, for inkjet printing, for laser printing, for copying, for image formation by heat-sensitive transfer system, for an optical recording material, for an organic EL (electroluminescent) light-emitting material, for laser, for an organic semiconductor, for a solar cell, for a fluorescent probe, for a nonlinear optical material, for various filters for a solid state pickup tube, etc., or for a display (e.g. a color LCD).

The azo dye of the present invention preferably has the absorption maximum in a desired region of absorption wavelength. In particular, but not limited to, it is preferable to have the absorption maximum at a wavelength of, for example, 400 to 800 nm, more preferably at a wavelength of 500 to 700 nm. Further, the molar absorption coefficient ε of the azo dye is preferably in the range of 10,000 to 150,000, more preferably in the range of 10,000 to 100,000.

When the azo compound or the azo dye of the present invention is used as a pigment or a coloring composition, the content thereof is, but not specifically limited to, preferably in the range of 0.1 to 90% by mass.

According to the present invention, it is possible to provide a novel azo compound and a novel azo dye, each having excellent fastness properties to heat, light, and the like, sufficient dyeing properties, and migration properties, while having clearness and high color density.

The azo compound and azo dye of the present invention show clearness and high color density and show excellent effects of expressing sufficient fastness properties to light, heat, and the like. In addition, the azo compound and the azo dye of the present invention can be favorably used as a pigment and a coloring agent and have sufficient dyeing properties and sufficient transfer-migration properties in transferred image formation while having a high spectral absorption coefficient.

The present invention will be described in more detail based on the following examples, but the invention is not intended to be limited thereto.

### EXAMPLES

The exemplified Compound D-12 was synthesized according to the following Scheme 1. Note that, in the scheme, "Ac" represents an acetyl group and "%" represents "% by mass".

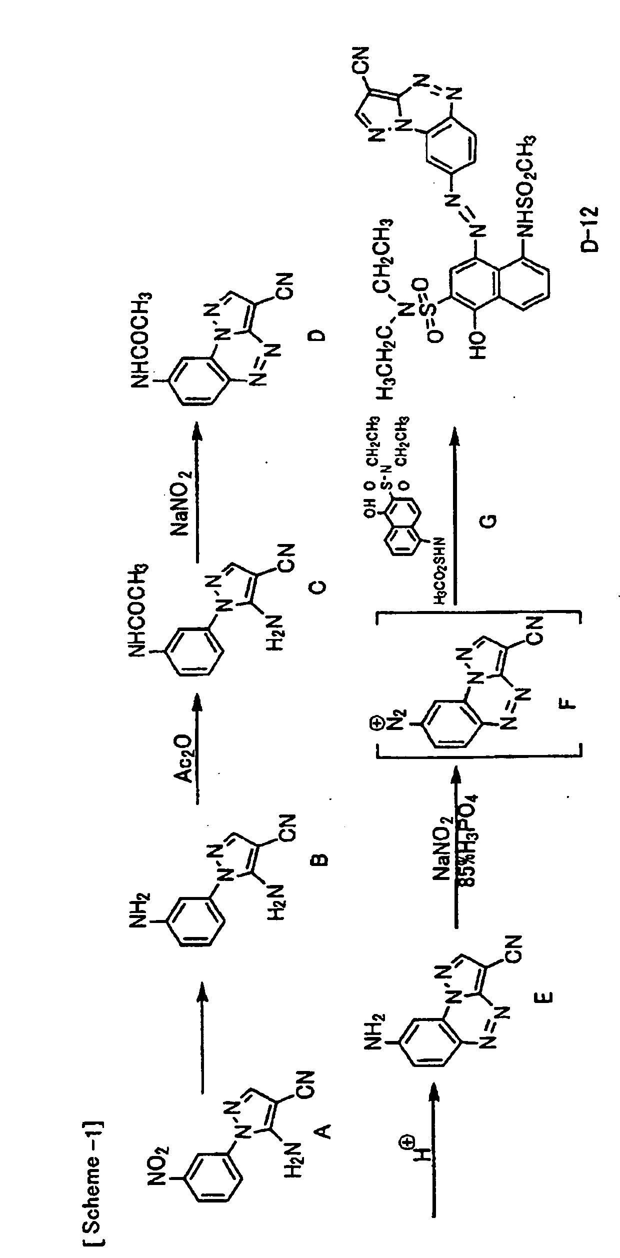

### (A) Synthesis of Compound A

First, 240 ml of ethanol was added to 75 g of m-nitrophenylhydrazine sulfate and 55 ml of triethyl amine was then added thereto while being stirred. The resulting solution was refluxed under heat and 50 ml of an ethanol solution containing 76 g of ethoxymethylene malononitrile was then dropped into the solution. After completing the dropping, the reaction solution was refluxed under heat for 3 hours while being stirred. Subsequently, the reaction solution was concentrated under reduced pressure until it reached a total amount of about 150 ml. The concentrated reaction solution was cooled with water and the obtained crystals were then filtrated and dried. Consequently, 63.6 g of Compound A was obtained (75% in yield).

### (B) Synthesis of Compound B

First, 104 g of iron powder, 11.4 g of ammonium chloride, and 85 g of water were mixed together and then stirred for 10 minutes at an external temperature of 100°C. In addition, 850 ml of 2-propanol was added to the mixture. Subsequently, 81.8 g of Compound A was divided and gradually added to the mixture over 30 minutes while being stirred and refluxed under heat. After completing the addition, the resulting solution was further subjected to reflux under heat for 1 hour. The mixture solution was filtrated through a celite filter with heating and a filtrate was then concentrated under reduced pressure. To the concentrated solution, was added water, and the resulting solution was left standing at room temperature for 3 hours. Deposited crystals were obtained by filtration and then washed by applying methanol and dried. Consequently, 60 g of Compound B was obtained (84% in yield).

### (C) Synthesis of Compound D

First, 10 g of Compound B was suspended in 50 ml of acetonitrile, and then 4.5 ml of acetic anhydride was added thereto at room temperature. After stirring for 1 hour, the reaction solution was concentrated and dried under reduced pressure. The resulting product was extracted with ethyl acetate/water and then washed with water, followed by overnight-drying with magnesium sulfate. Subsequently, the magnesium sulfate was removed by filtration and a filtrate was then concentrated and dried (Compound C). After that, 150 g of phosphoric acid (85% by weight) was added to the resulting compound. Then, 3.1 g of sodium nitrite was divided and gradually added to the mixture for about 60 minutes, while stirring at 0°C or lower. A post-reaction was performed at 0 to 5°C for 2 hours. Subsequently, 500 ml of ice water was added to the reaction solution and deposited crystals were then collected by filtration. The crystals were washed by applying acetonitrile. The resulting crystals were purified by column chromatography. Consequently, 5 g of Compound D was obtained.

### (D) Synthesis of Compound E

First, 5 g of Compound D was suspended in a mixture of 30 ml of hydrochloric acid (35% by weight) and 30 ml of isopropanol and then stirred for 3 hours under heat at a temperature of 60 to 70°C. The reaction mixture was concentrated under reduced pressure. To the residue, 200 ml of ice water was added. Deposited crystals were collected by filtration and then dried. Consequently, 2.5 g of Compound E was obtained.

### (E) Synthesis of Compound D-12

First, 1 g of Compound E was dissolved in 20 ml of phosphoric acid (85% by weight). Then, 0.36 g of sodium nitrite was divided and gradually added to the solution over 30 minutes while being stirred at 0°C or lower. Further, the solution was further stirred for 2 hours at 0 to 5°C, thereby obtaining Compound F.

Subsequently, 1.4 g of Compound G was dissolved in 150 ml of methanol. Then, the diazonium salt (Compound F), which was previously synthesized, was divided and gradually added to the solution of Compound G while being stirred at 0°C or less, so as to become 0°C or less. The mixture was stirred at 0 to 5°C for 1 hour and then stirred at 20 to 25°C (room temperature) for 1 hour. Subsequently, 200 ml of water was added to the reaction mixture. Deposited crystals thus obtained were filtrated and dried, and then purified by column chromatography. Consequently, 0.5 g of Compound D-12 was obtained (20% in yield).

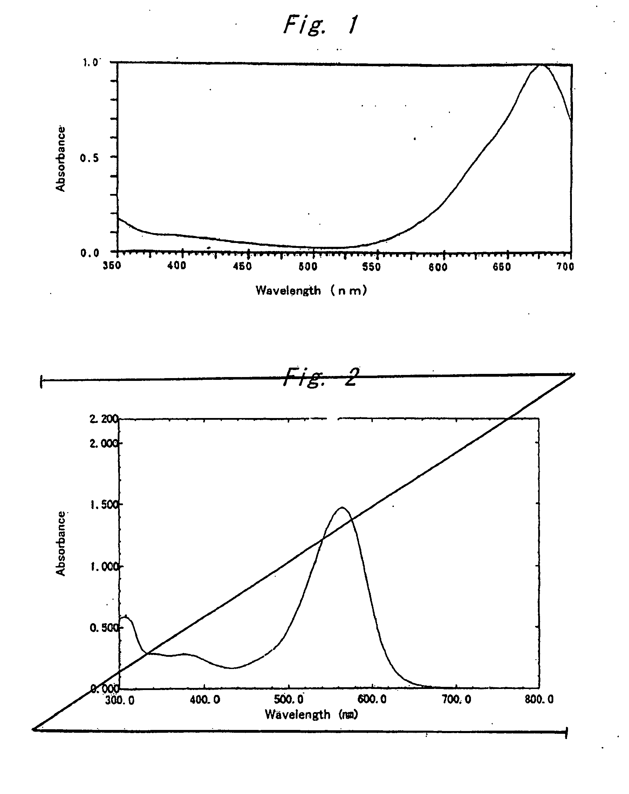

Compound D-12 had a melting point of 258 to 260°C. The absorption spectrum of the compound was determined in DMF (N,N'-dimethyl formaldehyde). As a result, the compound showed the absorption maximum λₘₐₓ at 677 nm (ε 82,300), confirming that the dye had good hue (see FIG. 1).

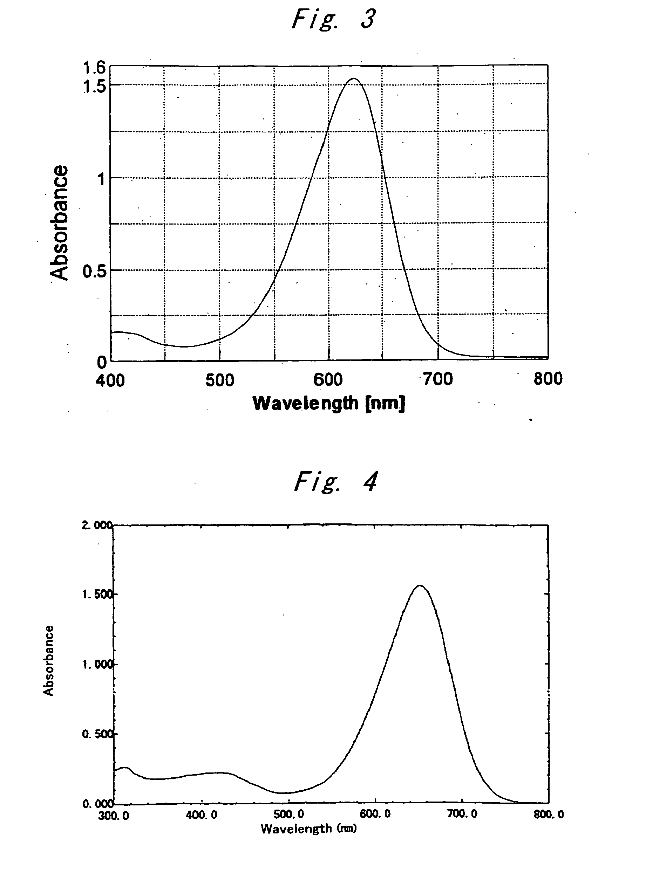

Compound D-25 and Compound D-36 were each synthesized in a manner similar to the synthetic method of Compound D-12 as described above, except that the coupler component in the scheme 1 was replaced with 2,5-difluorophenol for Compound D-25, and with 2-chlorophenol for Compound D-36. The melting points and the maximum absorption of the synthesized compounds are shown below.
D-25 Melting point: 233°C, Absorption maximum: 624 nm (see FIG. 3)
D-36 Melting point: 237 to 238°C, Absorption maximum: 653 nm (see FIG. 4)

Additionally, the compounds described in Table 1 below were synthesized in a manner similar to the synthetic scheme of the above Compound D-12, except that the coupler component in the scheme 1 was replaced with an appropriate component for each compound and a diazo component was optionally synthesized with reference to documents such as JP-A-2006-143902; JP-A-2006-169239; and Liebigs Annalen der Chemie, GE, 1979, pp. 1534-1546.

Both the absorption maximum wavelength (λₘₐₓ) and the molar absorption coefficient(εₘₐₓ) of each compound thus obtained were determined and the results thereof were then listed in Table 1 below together with the hue of the compound.

**Table 1**

| Exemplified compound No. | λₘₐₓ (nm) | εₘₐₓ | Yield | Color |
|---|---|---|---|---|
| D-2 | 650.0 | 20000 | 20% | Blue-green |
| D-4 | 640.0 | 21000 | 28% | Blue-green |
| D-13 | 551.0 | 14700 | 31% | Reddish purple |
| D-17 | 617.0 | 29600 | 23% | Blue |
| D-25 | 624.0 | 56700 | 33% | Blue |
| D-29 | 595.0 | 28600 | 22% | Blue |
| D-32 | 550.0 | 25700 | 38% | Reddish purple |
| D-35 | 667.0 | 51000 | 33% | Blue-green |
| D-36 | 653.0 | 53000 | 38% | Blue-green |

The dyeing properties, migration properties, and fastness properties of the compound D-12 were evaluated as follows:

### [Production of heat-sensitive transfer dye-supplying material (P-1)]

A heat-resistant slipping layer was formed on one surface of a polyethylene terephthalate film with a thickness of 5 µm, and the film was being served as a support. On the side of the support opposite to the heat-resistant slipping layer side, a coating composition (1) of a dye-supplying layer with a composition as described below was applied by a gravure coater so as to be 0.6 µm in thickness after drying. Consequently, a heat-sensitive transfer dye-supplying material (P-1) (hereinafter, also simply referred to as dye-supplying material).

### <Coating composition (1) of dye-supplying layer>

| | |
|---|---|
| Compound D-12 | 10 g |
| Polyvinyl butyral (trade name: DENKA BUTYRAL 5000A, manufactured by Denki Kagaku Kogyo Kabushiki Kaisha) | 10 g |
| Silicone oil (trade name: KF-96, manufactured by Shin-Etsu Chemical Co., Ltd.) | 0.2 g |
| Polysocyanate (trade name: TAKENATE D110N, manufactured by Takeda Pharmaceutical Company Limited.) | 0.5 g |
| Methyl ethyl ketone | 100 ml |
| Toluene | 80 ml |

### [Production of heat-sensitive transfer image-receiving material (1)]

A sheet of laminating-type synthetic paper with a thickness of 150 µm was used as a support. A coating composition (1) of a receptive layer was applied on one surface of the support using a wire bar coater so as to be 5 µm in thickness after drying. Consequently, a heat-sensitive transfer image-receiving material (1) (hereinafter, also simply referred to as image-receiving material) was obtained. The drying was carried out in an oven at 80°C for 1 hour after pre-drying with a dryer.

### <Coating composition (1) of a receptive layer>

| | |
|---|---|
| Pigment-fixing agent: A-9 (trade name: AEA, manufactured by Sankyo Co., Ltd.) | 26g |
| Polyisocyanate (trade name: KP-90, manufactured by Dainippon Ink and Chemicals, Incorporated) | 4 g |
| Amino-modified silicone oil (trade name: KP-857, manufactured by Shin-Etsu Silicone Co., Ltd.) | 0.5 g |
| Methyl ethyl ketone | 100 ml |
| Toluene | 50 ml |
| Cyclohexanone | 10 ml |

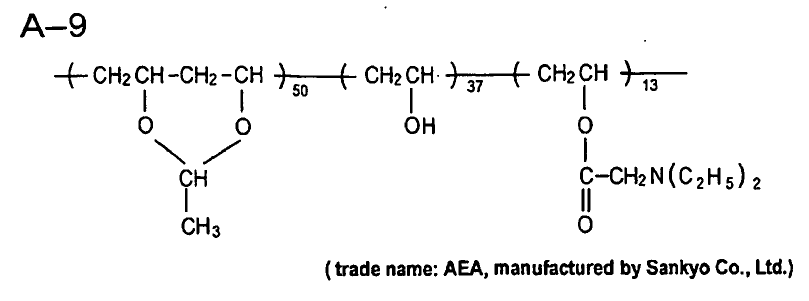

The heat-sensitive transfer dye-supplying material (P-1) obtained as described above was used to laminate the dye-supplying layer and a receptive layer of the heat-sensitive transfer image-receiving material, so as to be in contact with each other. Subsequently, from the side of the support of the heat-sensitive transfer dye-supplying material, heating was performed using a thermal head under the conditions in which the thermal head had an output of 0.25 W/dot, a pulse width of 0.1 to 10 msec, and a dot density of 6 dots/mm to place the dye on the receptive layer of the image-receiving material to make an image-like pattern thereon. Consequently, clear image recording without the transferal irregularity was obtained.

A portion (Dmax portion) where the density of the recorded image-receiving material obtained at this time was subjected to a measurement with a reflecting densitometer (status-A filter built-in type, manufactured by X Rite Inc.) and the maximum transfer density of an image was then measured. Subsequently, the recorded image-receiving material was irradiated for 7 days with light at 17,000 Ix from a fluorescent lamp and the light-fastness properties of the image were then investigated. The portion showing a reflection density of 1.0 was subjected to a reflection density measurement after the examination and the stability thereof was evaluated by the persistence (%) of the reflection density after the examination to the refection density 1.0 before the examination. In addition, the thermal stability of the image was evaluated after storing in an oven at 60°C for 1 week. As a result, the material using the compound D-12 of the present invention was stable because no decrease in density and no color change were observed.

Further, the recorded image-receiving material was stored in an oven at 60°C for 2 weeks and the degree of image-bleeding was then observed. The evaluation was performed on the basis of the following criteria: good (○): no substantial change of an image from one before the storage; allowable (Δ): slightly bled; and unallowable practically (x): extremely bled and blurred. Any image formed with the compound D-12 of the present invention did not show any substantial change, compared with one before the storage (O).

As is evident from the above results, the azo compound of the present invention provides an image with high transfer density (with sufficient dyeing properties and migration properties) and a clear image with excellent fastness properties to light and heat as well as no substantial image blur over time.

Coating compositions P-3 and P-4 of dye-supplying layers were prepared in a manner similar to one described above, except that the compounds D-25, and D-36 were used instead of the compound D-12, and then each of those were examined as described above. As a result compounds D-25, and D-36 showed good dyeing properties, migration properties, fastness properties just as in the case of the compound D-12.

## Claims

1. An azo compound represented by Formula (1): 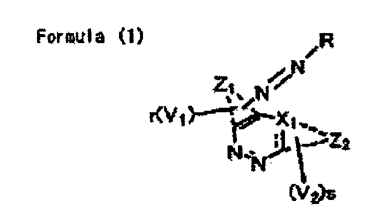 wherein Z₁ represents a group of atoms necessary for forming an aromatic ring or an aromatic hetero ring; Z₂ represents a group of atoms necessary for forming an aromatic hetero ring; V₁ and V₂ each represent a substituent on the aromatic ring or the aromatic hetero ring formed by Z₁ or Z₂; r represents 0 to 3; s represents 0 to 3; R represents a coupler component; R, V₁, and V₂ do not include any of a carboxyl group, a sulfo group and a quaternary ammonium group; and X₁ represents a carbon atom or a nitrogen atom; wherein R is represented by one of Formula (5), Formula (6), Formula (7), Formula (8), Formula (9), Formula (10), Formula (11), Formula (12), Formula (13), Formula (14) and Formula (15) : 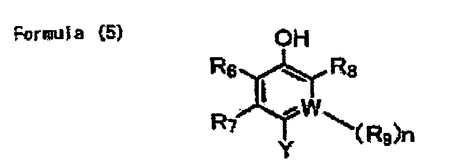 wherein Y represents a binding site to the azo group;
R₆, R₇, R₈, and R₉ each represent a hydrogen atom or a substituent, and may be bonded with each other to form a condensed ring; W represents a carbon atom or a nitrogen atom; when W represents a carbon atom, n represents 1; and when W represents a nitrogen atom, n represents 0; 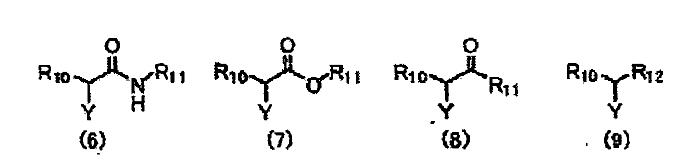 wherein R₁₀ represents an acyl group, a cyano group, a nitro group, an aryl group, a heterocyclic group, an alkoxycarbonyl group, an aryloxycarbonyl group, a carbamoyl group, a sulfamoyl group, an alkylsulfonyl group, or an arylsulfonyl group; R₁₁ represents an alkyl group, an aryl group, or a heterocyclic group; and R₁₂ represents an aryl group or a heterocyclic group; 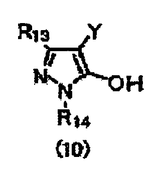 wherein R₁₃ represents a cyano group, a carbamoyl group, an alkoxycarbonyl group, an acylamino group, an arylamino group, an alkoxy group, an aryloxy group, or an alkyl group; and R₁₄ represents a phenyl group, or a phenyl group substituted by at least one halogen atom, alkyl group, cyano group, alkoxy group, alkoxycarbonyl group, or acylamino group; 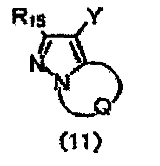 wherein R₁₅ represents a hydrogen atom or a substituent, and Q represents a group of non-metal atoms necessary for forming of a 5-membered azole ring containing 2 to 4 nitrogen atom; 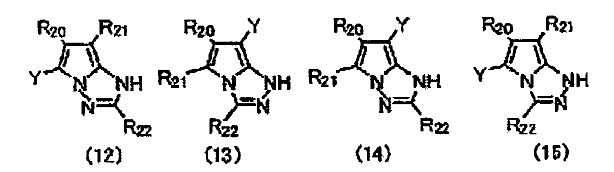 wherein R₂₀, R₂₁, and R₂₂ each represent a hydrogen atom or a substituent.

2. The azo compound according to Claim 1, wherein the azo compound is represented by Formula (2): 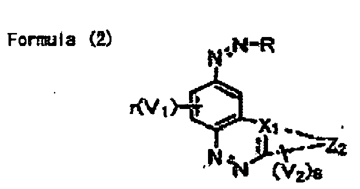 wherein Z₂ represents a group of atoms necessary for forming an aromatic hetero ring; V₁ represents a substituent on the aromatic ring; V₂ represents a substituent on the aromatic hetero ring formed by Z₂; r represents 0 to 3; s represents 0 to 3; R represents a coupler component as defined in Claim 1; R, V₁, and V₂ do not include any of a carboxyl group, a sulfo group and a quaternary ammonium group; and X₁ represents a carbon atom or a nitrogen atom.

3. The azo compound according to Claim 1 or Claim 2, wherein the azo compound is represented by Formula (3): 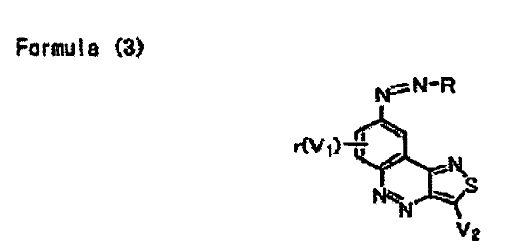 wherein V₁ and V₂ each represent a substituent; r represents 0 to 3; R represents a coupler component as defined in Claim 1; and R, V₁, and V₂ do not include any of a carboxyl group, a sulfo group and a quaternary ammonium group.

4. The azo compound according to Claim 1 or Claim 2, wherein s in Formula (1) or Formula (2) represents 1 or 2.

5. The azo compound according to Claim 1 or Claim 2, wherein the azo compound is represented by Formula (4): 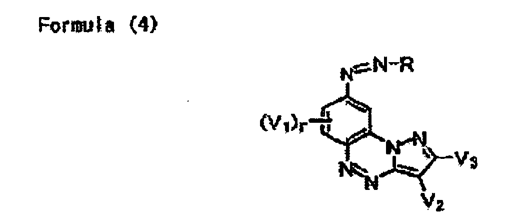 wherein V₁, V₂ and V₃ each represent a substituent; r represents 0 to 3; R represents a coupler component as defined in Claim 1; R, V₁, V₂ and V₃ do not include any of a carboxyl group, a sulfo group and a quaternary ammonium group; V₂ and V₃ may be bonded with each other to form a saturated or unsaturated 5- or 6-membered ring; when V₂ and V₃ are bonded with each other to form a ring, the ring may be a heterocyclic or aromatic, saturated or unsaturated ring; and when V₂ and V₃ are bonded with each other to form a ring, the total number of carbon atoms and hetero atoms in the ring is 3 to 6.

6. The use of an azo compound according to any preceding claim for dyeing textile fibres, leather, paper, plastic, fur, food or hair, or in an ink.

## Patentansprüche

1. Azoverbindung der folgenden Formel (1): 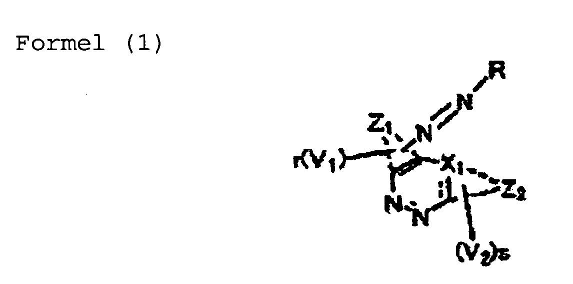 worin Z₁ eine Gruppe von Atomen ist, die nötig sind zur Bildung eines aromatischen Rings oder eines aromatischen Heterorings; Z₂ eine Gruppe von Atomen ist, die nötig sind zur Bildung eines aromatischen Heterorings; V₁ und V₂ jeweils Substituenten des aromatischen Rings oder des aromatischen Heterorings sind, der durch Z₁ oder Z₂ gebildet ist; r 0 bis 3 ist; s 0 bis 3 ist; R eine Kupplungskomponente ist; R, V₁ und V₂ keine Carboxylgruppe, Sulfogruppe und/oder quaternäre Ammoniumgruppe einschließen; und X₁ ein Kohlenstoffatom oder ein Stickstoffatom ist; worin R durch eine aus Formel (5), Formel (6), Formel (7), Formel (8), Formel (9), Formel (10), Formel (11), Formel (12), Formel (13), Formel (14) und Formel (15) dargestellt ist: 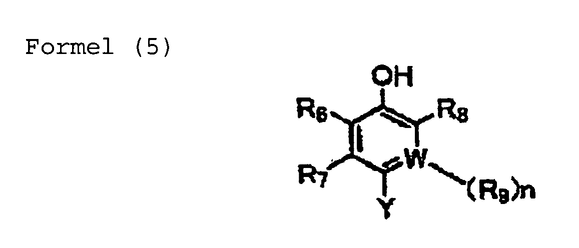 worin Y eine Bindungsstelle zu der Azogruppe ist; R₆, R₇, R₈ und R₉ jeweils ein Wasserstoffatom oder ein Substituent ist, der mit jedem anderen zur Bildung eines kondensierten Rings verknüpft sein kann; W ein Kohlenstoffatom oder ein Stickstoffatom ist; wenn W ein Kohlenstoffatom ist, ist n 1; und wenn W ein Stickstoffatom ist, ist n 0; 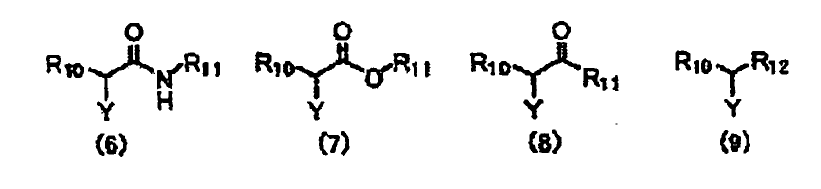 worin R₁₀ eine Acylgruppe, eine Cyanogruppe, eine Nitrogruppe, eine Arylgruppe, eine heterocyclische Gruppe, eine Alkoxycarbonylgruppe, eine Aryloxycarbonylgruppe, eine Carbamoylgruppe, eine Sulfamoylgruppe, eine Alkylsulfonylgruppe oder eine Arylsulfonylgruppe ist; R₁₁ eine Alkylgruppe, eine Arylgruppe oder eine heterocyclische Gruppe ist; und R₁₂ eine Arylgruppe oder eine heterocyclische Gruppe ist; 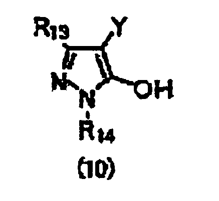 worin R₁₃ eine Cyanogruppe, eine Carbamoylgruppe, eine Alkoxycarbonylgruppe, eine Acylaminogruppe, eine Arylaminogruppe, eine Alkoxygruppe, eine Aryloxygruppe oder eine Alkylgruppe ist; und R₁₄ eine Phenylgruppe oder eine Phenylgruppe, die mit mindestens einem Halogenatom substituiert ist, eine Alkylgruppe, eine Cyanogruppe, eine Alkoxygruppe, eine Alkoxycarbonylgruppe oder eine Acylaminogruppe ist; 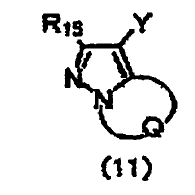 worin R₁₅ ein Wasserstoffatom oder ein Substituent ist und Q eine Gruppe von Nicht-Metallatomen ist, die zur Bildung eines 5-gliedrigen Azorings, der 2 bis 4 Stickstoffatome enthält, nötig sind; 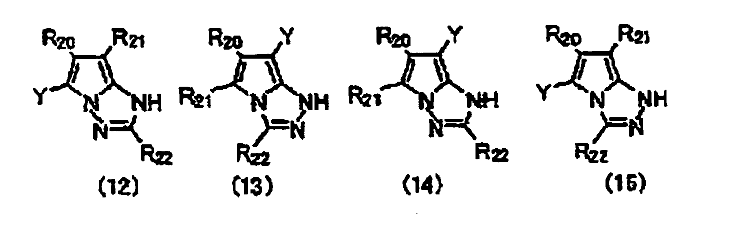 worin R₂₀, R₂₁ und R₂₂ jeweils ein Wasserstoffatom oder ein Substituent ist.

2. Azoverbindung gemäß Anspruch 1, worin die Azoverbindung durch Formel (2) dargestellt ist: 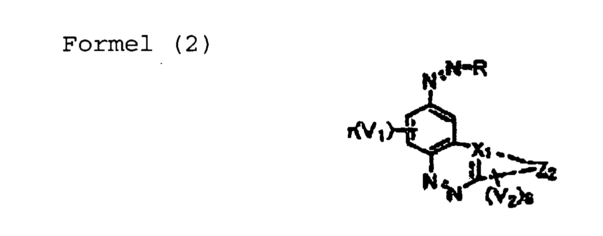 worin Z₂ eine Gruppe von Atomen ist, die zur Bildung eines aromatischen Heterorings nötig sind; V₁ ein Substituent eines aromatischen Rings ist; V₂ ein Substituent des aromatischen Heterorings ist, der durch Z₂ gebildet ist; r 0 bis 3 ist; s 0 bis 3 ist; R eine wie in Anspruch 1 definierte Kupplungskomponente ist; R, V₁ und V₂ schließen keine Carboxylgruppe, Sulfogruppe und/oder quartäre Ammoniumgruppe ein; und X₁ ist ein Kohlenstoffatom oder ein Stickstoffatom.

3. Azoverbindung gemäß Anspruch 1 oder 2, worin die Azoverbindung durch Formel (3) dargestellt ist: 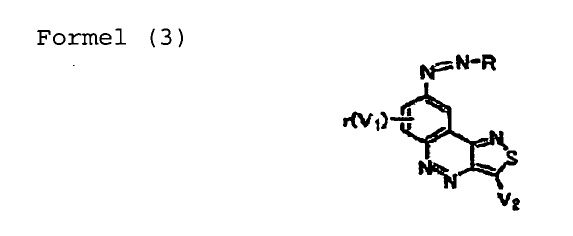 worin V₁ und V₂ jeweils ein Substituent ist; r 0 bis 3 ist; R eine wie in Anspruch 1 definierte Kupplungskomponente ist; und R, V₁ und V₂ keine Carboxylgruppe, Sulfogruppe und/oder quartäre Ammoniumgruppe einschließen.

4. Azoverbindung gemäß Anspruch 1 oder 2, worin s in Formel (1) oder Formel (2) 1 oder 2 ist.

5. Azoverbindung gemäß Anspruch 1 oder 2, worin die Azoverbindung durch Formel (4) dargestellt ist: 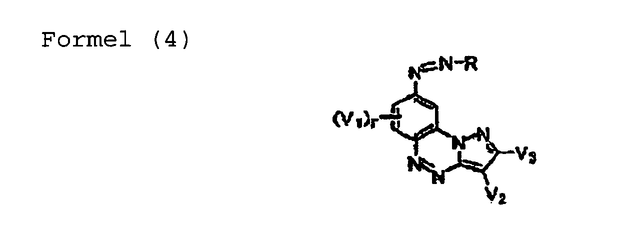 worin V₁, V₂ und V₃ jeweils ein Substituent ist; r 0 bis 3 ist; R eine wie in Anspruch 1 definierte Kupplungskomponente ist; und R, V₁, V₂ und V₃ keine Carboxylgruppe, Sulfogruppe und/oder quartäre Ammoniumgruppe einschließen; V₂ und V₃ können zur Bildung eines gesättigten oder ungesättigten 5- oder 6-gliedrigen Rings jeweils miteinander verknüpft sein; wenn V₂ und V₃ zur Bildung eines Rings miteinander verknüpft sind, kann der Ring ein heterocyclischer oder aromatischer, gesättigter oder ungesättigter Ring sein;
und wenn V₂ und V₃ zur Bildung eines Rings miteinander verknüpft sind, ist die Gesamtanzahl der Kohlenstoffatome und Heteroatome in dem Ring 3 bis 6.

6. Verwendung einer Azoverbindung gemäß irgendeinem der vorangehenden Ansprüche zum Färben von Textilfasern, Leder, Papier, Kunststoff, Pelz, Lebensmittel oder Haar oder in einer Tinte.

## Revendications

1. Composé azo représenté par la formule (1) : 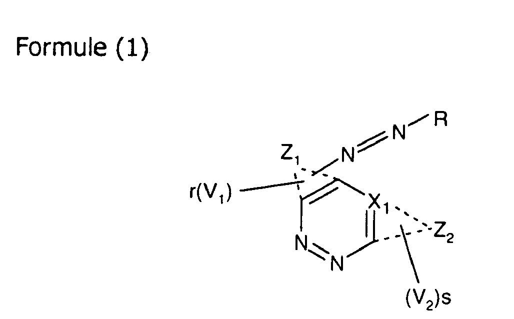 dans laquelle Z₁ représente un groupe d'atomes nécessaire pour former un cycle aromatique ou un hétérocycle aromatique ; Z₂ représente un groupe d'atomes nécessaire pour former un hétérocycle aromatique ; V₁ et V₂ représentent chacun un substituant sur le cycle aromatique ou l'hétérocycle aromatique formé par Z₁ ou Z₂ ; r représente 0 à 3 ; s représente 0 à 3 ; R représente un constituant d'agent de couplage ; R, V₁ et V₂ ne comprennent pas de groupe carboxyle, de groupe sulfo ni de groupe ammonium quaternaire ; et X₁ représente un atome de carbone ou un atome d'azote ;
dans laquelle R est représenté par l'une de la formule (5), formule (6), formule (7), formule (8), formule (9), formule (10), formule (11), formule (12), formule (13), formule (14) et formule (15) : 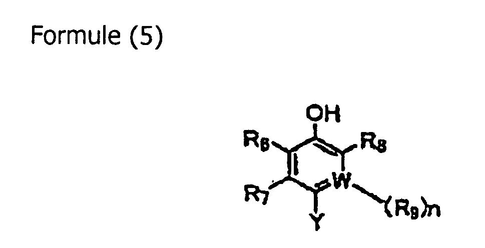 dans laquelle Y représente un site de liaison au groupe azo ; R₆, R₇, R₈ et R₉ représentent chacun un atome d'hydrogène ou un substituant, et peuvent être liés les uns aux autres pour former un cycle condensé ; W représente un atome de carbone ou un atome d'azote ; lorsque W
représente un atome de carbone, n représente 1 ; et lorsque W représente un atome d'azote, n représente 0 ; 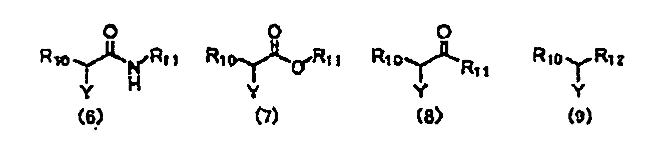 dans lesquelles R₁₀ représente un groupe acyle, un groupe cyano, un groupe nitro, un groupe aryle, un groupe hétérocyclique, un groupe alcoxycarbonyle, un groupe aryloxycarbonyle, un groupe carbamoyle, un groupe sulfamoyle, un groupe alkylsulfonyle, ou un groupe arylsulfonyle ; R₁₁ représente un groupe alkyle, un groupe aryle, ou un groupe hétérocyclique ; et R₁₂ représente un groupe aryle ou un groupe hétérocyclique ; 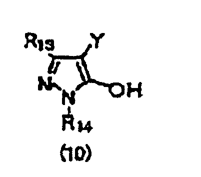 dans laquelle R₁₃ représente un groupe cyano, un groupe carbamoyle, un groupe alcoxycarbonyle, un groupe acylamino, un groupe arylamino, un groupe alcoxy, un groupe aryloxy, ou un groupe alkyle ; et R₁₄ représente un groupe phényle, ou un groupe phényle substitué par au moins un atome d'halogène, un groupe alkyle, un groupe cyano, un groupe alcoxy, un groupe alcoxycarbonyle, ou un groupe acylamino ; 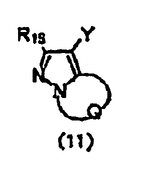 dans laquelle R₁₅ représente un atome d'hydrogène ou un substituant, et Q représente un groupe d'atomes non métalliques nécessaire pour former un cycle azole à 5 éléments contenant de 2 à 4 atomes d'azote ; 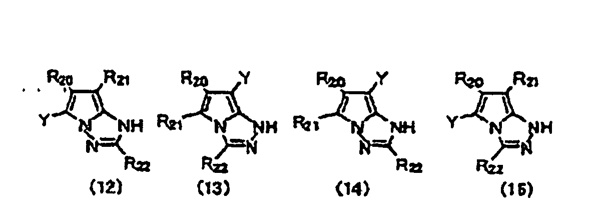 dans lesquelles R₂₀, R₂₁, et R₂₂ représentent chacun un atome d'hydrogène ou un substituant.

2. Composé azo selon la revendication 1, dans lequel le composé azo est représenté par la formule (2) : 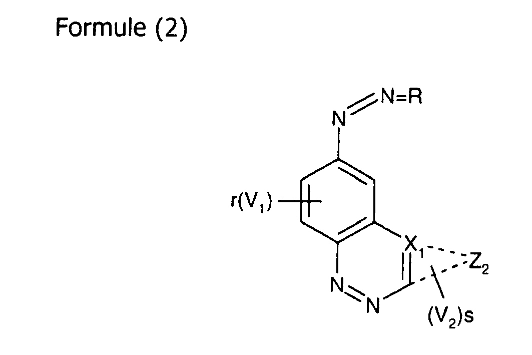 dans laquelle Z₂ représente un groupe d'atomes nécessaire pour former un hétérocycle aromatique ; V₁ représente un substituant sur le cycle aromatique ; V₂ représente un substituant sur l'hétérocycle aromatique formé par Z₂ ; r représente 0 à 3 ; s représente 0 à 3 ; R représente un constituant d'agent de couplage comme défini dans la revendication 1 ; R, V₁, et V₂ ne comprennent pas de groupe carboxyle, de groupe sulfo ni de groupe ammonium quaternaire ; et X₁ représente un atome de carbone ou un atome d'azote.

3. Composé azo selon la revendication 1 ou la revendication 2, dans lequel le composé azo est représenté par la formule (3) : 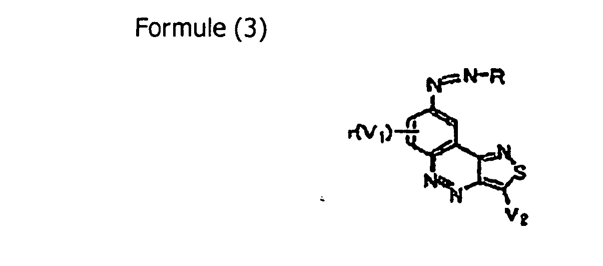 dans laquelle V₁ et V₂ représentent chacun un substituant ; r représente 0 à 3 ; R représente un constituant d'agent de couplage comme défini dans la revendication 1 ; et R, V₁, et V₂ ne comprennent pas de groupe carboxyle, de groupe sulfo ni de groupe ammonium quaternaire.

4. Composé azo selon la revendication 1 ou la revendication 2, dans lequel s dans la formule (1) ou la formule (2) représente 1 ou 2.

5. Composé azo selon la revendication 1 ou la revendication 2, dans lequel le composé azo est représenté par la formule (4) : 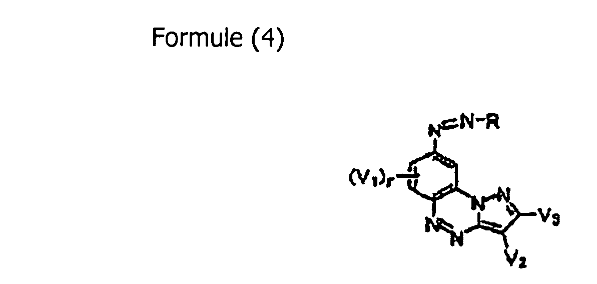 dans laquelle V₁, V₂ et V₃ représentent chacun un substituant ; r représente 0 à 3 ; R représente un constituant d'agent de couplage comme défini dans la revendication 1 ; R, V₁, V₂ et V₃ ne comprennent pas de groupe carboxyle, de groupe sulfo ni de groupe ammonium quaternaire ; V₂ et V₃ peuvent être liés l'un à l'autre pour former un cycle à 5 ou 6 éléments saturé ou insaturé ; lorsque V₂ et V₃ sont liés l'un à l'autre pour former un cycle, le cycle peut être un cycle hétérocyclique ou aromatique, saturé ou insaturé ; et lorsque V₂ et V₃ sont liés l'un à l'autre pour former un cycle, le nombre total d'atomes de carbone et d'hétéroatomes dans le cycle est de 3 à 6.

6. Utilisation d'un composé azo selon l'une quelconque des revendications précédentes pour teindre des fibres textiles, du cuir, du papier, du plastique, de la fourrure, des aliments ou des cheveux, ou dans une encre.
